# EUROPÄISCHE PATENTSCHRIFT

(11) **EP 0 685 373 B1**
(45) Veröffentlichungstag und Bekanntmachung des Hinweises auf die Patenterteilung: **23.09.1998**
(21) Anmeldenummer: 94108420.4
(22) Anmeldetag: 01.06.1994
(51) Int. Cl.: B60R 22/20

(54) **Höhenversteller für Umlenkbeschläge von Sicherheitsgurten in Kraftfahrzeugen**
Adjustable shoulder anchorage for a vehicle seat belt system
Dispositif de réglage en hauteur d'un renvoi de ceinture de sécurité pour véhicules

(43) Veröffentlichungstag der Anmeldung: 06.12.1995
(73) Patentinhaber: Griesemer, Albert, D-56457 Westerburg (DE)
(72) Erfinder: Griesemer, Albert, D-56457 Westerburg (DE); Kreim, Else, D-64572 Büttelborn (DE)
(74) Vertreter: Grommes, Karl F., Dr.

(56) Entgegenhaltungen:
- EP-A- 0 245 075
- FR-A- 2 516 799
- FR-A- 2 564 792
- GB-A- 2 255 490

## Beschreibung

### Technisches Gebiet

Die Erfindung betrifft einen Hohenversteller für Umlenkbeschlage von Sicherheitsgurten in Kraftfahrzeugen gemäß dem Oberbegriff von Anspruch 1.

### Stand der Technik

Bei einem bekannten Höhenversteller dieser Art (vgl. EP-A-245 075) ist einerseits infolge der Mehrfachverriegelung eine hohe Sicherheit gegeben, andererseits ist es nicht leicht, die optimale Verriegelungsstellung (Höhe) aufzufinden. Werden nämlich zum Verstellen die Sperrorgane verriegelt, kann das Verstellteil frei auf und ab bewegt werden, ohne daß der Benutzer merkt, auf welcher Höhe er erneut verriegeln kann. Läßt er dagegen einfach die Feder wieder los, d.h. auf die Sperrorgane wirken, so kommt es bereits an den nächsten Rastöffnungen zum Verriegeln, vorausgesetzt daß der Verstellvorgang nicht zu hastig erfolgt. So kann es erforderlich werden, mehrfach zu entriegeln und durch Probieren eine andere Stellung zum Verriegeln aufzuspüren, bis schließlich die optimale Höhenstellung aufgefunden ist.

### Darstellung der Erfindung

Hier setzt die Erfindung an. Sie will den bekannten Höhenversteller dahingehend weiterbilden, daß er einfach, schnell und bequem in eine andere (optimale) Verriegelungsstellung gebracht werden kann.

Gelöst wird diese Aufgabe mit den kennzeichnenden Merkmalen des Anspruchs 1.

So ergibt sich bereits ein erheblich gesteigerter Bedienungskomfort, wenn mindestens ein elastisches Rastelement zur Erzielung einer Vorrastung, entsprechend den zwischen Sperrklinken und seitlichen Rastöffnungen möglichen Stellungen, vorgesehen ist. Dabei kann das elastische Rastelement eine aus dem Material des Verstellteils geformte (angespritzte) Lippe, Feder o. dgl. sein. Ebensogut kann aber auch das elastische Rastelement eine in das Verstellteil eingelassene Blattfeder aus Metall sein.

Ferner erweist es sich als zweckmäßig, wenn für das elastische Rastelement oder die elastischen Rastelemente eigene Ausnehmungen in der Führungsschiene vorgesehen sind, insbesondere am Boden und/oder im Bereich der Begrenzungsflanken der Führungsschiene.

Die vorgeschlagene Ausgestaltung läßt die Sicherheit des Höhenverstellers unberührt, d.h. sie beeinträchtigt diese auf keinen Fall. Im Gegenteil läßt sie den Weg frei für zahlreiche Weiterbildungen hinsichtlich Herstellung, Sicherheit, Handhabung und damit zusammenhängende Aspekte.

So sollte nach einem weiteren Vorschlag der Umlenkbeschlag an den Sperrorganen unmittelbar angreifen. Dies ist dann der Fall, wenn das (von der möglichen Ausziehrichtung gesehen) hintere Sperrorgan einen Gewindedurchzug zum Einschrauben des Umlenkbeschlages aufweist.

Dieselbe Wirkung ist aber auch gegeben, wenn nach einem weiteren Vorschlag ein mit einem entsprechenden Gewinde sowie einem Kragen versehener loser Zentrierbolzen (=Zentrierhülse, Zentrierbuchse) vorgesehen wird, welcher in zentrale Ausnehmungen der Sperrorgane einsetzbar ist und an der Rückseite des hinteren Sperrorgans anschlägt. Dabei nimmt im Belastungsfalle wieder das hintere Sperrorgan primär die Last, d. h. den Zug des Umlenkbeschlages auf, wobei es sich auf das vordere Sperrorgan flächig (mitsamt dem Gewindedurchzug bzw. Zentrierbolzen) abstützen kann.

Letztgenannte Ausführung besitzt den Vorteil, daß die paarweise zu verwendenden Sperrorgane nur ein und dieselbe einfache Form zu haben brauchen, mithin besonders preiswert herstellbar sind.

Der Zentrierbolzen kann zweckmäßigerweise diametral gegenüberliegende seitliche Abflachungen aufweisen, um ihn ggf. zwischen parallelen Begrenzungsflanken der Führungsschiene zu führen und verdrehsicher zu halten.

Die Gewindeachse für den Umlenkbeschlag kann mit der Drehachse für die Sperrorgane zusammenfallen; es ist aber auch möglich, die Gewindeachse parallel versetzt zur Drehachse vorzusehen, um ggf. besonderen Anforderungen bei der Fertigung, Handhabung oder aber Belastung zu entsprechen.

Vorteilhaft weisen die Sperrorgane zwischen ihren Sperrklinken einen flachen mittleren Bereich in Scheibenform auf, wobei die Sperrklinken dazu um das Maß der halben Materialstärke verkröpft sind. - Dadurch gelangen die einzelnen Sperrklinken in dieselbe Wirkebene und brauchen die Rastöffnungen in etwa nur so breit zu sein, wie das Material der Sperrklinken stark ist. Damit bleibt ein sicherer Sitz im Belastungsfalle gewahrt.

Zweckmäßigerweise ist zwischen den gegenseitigen Berührungsflächen der Sperrorgane eine Kunststoffscheibe angeordnet. - Die Kunststoffscheibe kann Klappergeräusche zwischen den Metallteilen vermeiden, also schalldämmend wirken, und im übrigen den Reibungswiderstand herabsetzen.

Eine besonders einfache und wirksame Ausführungsform besteht darin, daß die auf die Sperrklinke eines Sperrorgans wirkende Feder sich gegen die benachbarte Sperrklinke des anderen Sperrorgans abstützt und jenes gleichzeitig mit beaufschlagt.

In weiterer Ausgestaltung ist als Feder eine als Formfeder ausgebildete Schenkelfeder vorgesehen, deren Enden mit den Sperrklinken verbunden sind und an deren mittlerem Bereich der Hebel zum Lösen der Verriegelung angreift.

Vorteilhaft ist für die übrigen Sperrklinken eine Druckfeder vorgesehen, welche im Bereich der Sperrklinken an Sicherungsnasen gehalten ist. Ähnlich vorteilhaft ist es, wenn für die übrigen Sperrklinken eine ggf. mit mehreren Windungen ausgestattete Schenkelfeder vorgesehen ist, welche auf einen Zapfen am Verstellteil aufgesteckt und daran gesichert ist.

Zweckmäßigerweise ist der Hebel zum Lösen der Verriegelung als Kipphebel ausgebildet, welcher mit seinem unteren Ende die Schenkelfeder zurückzieht und dadurch die Sperrklinken aus den Rastöffnungen zurücktreten läßt.

Besonders einfach in Aufbau und Montage ist ein Verstellteil, wenn zur Mitnahme der Schenkelfeder ein Schlitz am unteren Ende des Kipphebels vorgesehen ist.

Dem Verstellteil kommt vor allem die Aufgabe zu, eine Höhenverstellung des Umlenkbeschlages im entlasteten Zustand möglichst spurgenau und mühelos zu gestatten. Dies wird gefördert, wenn die Sperrorgane mindestens teilweise von dem Verstellteil umschlossen sind und dieses als zweiteiliges Kunststoffgehäuse mit einem Unterteil und einem damit verbindbaren, insbesondere aufklemmbaren, verrastbaren oder aufclipsbaren Oberteil ausgebildet ist.

Vorteilhaft greift das Unterteil des Verstellteils ggf. in eine etwa rechteckige Vertiefung in der Führungsschiene ein und ist mittels elastischer Führungslippen o. dgl. spielfrei geführt. Nach einem weiteren Vorschlag weist das Verstellteil ak34117769.docn seiner Unterseite Aussparungen und/oder Anschlußmittel für die freien Enden von Rückholelementen auf.

Zweckmäßigerweise sind als Rückholelement mindestens eine Zugfeder und als Anschlußmittel Anschlußnasen sowohl am Verstellteil als auch an der Führungsschiene vorgesehen. Vorteilhaft können als Rückholelement auch zwei parallele Bänder und als Anschlußmittel zwei Klemmen am Vertellteil vorgesehen sein, wobei die Bänder auf den Enden einer am oberen Ende der Führungsschiene angebrachten und von einer Schloßfeder gespannten Welle auf- und abwickelbar sind.

### Kurze Beschreibung der Zeichnung

Weitere Einzelheiten und Vorteile werden nachstehend in Verbindung mit der Zeichnung für mehrere bevorzugte Ausführungsbeispiele beschrieben. Darin zeigen:
- Fig. 1: einen erfindungsgemäßen Höhenversteller mit entriegeltem Verstellteil in Draufsicht, wobei die Führungsschiene in Höhe der Rastöffnungen längs geschnitten ist,
- Fig. 2: den Gegenstand von Fig. 1 mit verriegeltem Verstellteil,
- Fig. 3: das Verstellteil nach den Fig. 1 und 2, vergrößert und entlang der Linie A - A geschnitten,
- Fig. 4: den Gegenstand von Fig. 3 im Schnitt entlang der Linie B - B,
- Fig. 5: zwei zusammenwirkende Sperrorgane in Vorderansicht,
- Fig. 6: den Gegenstand von Fig. 5 in Draufsicht,
- Fig. 7: eine Führungsschiene in perspektivischer Ansicht,
- Fig. 8: ein einzelnes Sperrorgan in Draufsicht,
- Fig. 9: ein dazugehöriges zweites Sperrorgan, ebenfalls in Draufsicht,
- Fig. 10: die Sperrorgane nach den Fig. 8 und 9 im Querschnitt,
- Fig. 11 bis 13: den Fig. 8 bis 10 entsprechende Darstellungen, bei denen jedoch beide Sperrorgane dieselbe Ausgestaltung aufweisen.
- Fig. 14: einen losen Zentrierbolzen zur drehbaren Verbindung der Sperrorgane nach den Fig. 11 bis 13 in schematischer Seitenansicht,
- Fig. 15: einen Zentrierbolzen nach Fig. 14 in Draufsicht,
- Fig. 16: den Gegenstand von Fig. 15 in Seitenansicht sowie teilweise im Schnitt,
- Fig. 17: eine andere Ausführungsform eines Zentrierbolzens in Draufsicht,
- Fig. 18: den Gegenstand von Fig. 17 in Seitenansicht sowie teilweise im Schnitt,
- Fig. 19: einen Ausschnitt aus einem Höhenversteller mit eingesetztem Zentrierbolzen nach den Fig. 17 und 18 in vergrößerter Draufsicht sowie teilweise im Schnitt,
- Fig. 20: den Gegenstand von Fig. 19 im Schnitt entlang der Linie A - A,
- Fig. 21: eine andere Ausführungsform eines erfindungsgemäßen Höhenverstellers in Draufsicht,
- Fig. 22: noch eine andere Ausführungsform eines Höhenverstellers in Draufsicht,
- Fig. 23: ein Detail aus Fig. 22 im Schnitt entlang der Linie A - A,
- Fig. 24: ein weiteres Detail aus Fig. 22 in einer Ansicht entsprechend dem Pfeil W,
- Fig. 25: das Verstellteil aus Fig. 21, vergrößert und entlang der Linie A - A geschnitten,
- Fig. 26: den Gegenstand von Fig. 25 im Schnitt entlang der Linie B - B,
- Fig. 27: einen weiteren Höhenversteller in Draufsicht,
- Fig. 28: ein Detail aus Fig. 27 im Schnitt entlang der Linie A - A,
- Fig. 29: ein weiteres Detail aus Fig. 27 in Ansicht W,
- Fig. 30: ein weiteres Verstellteil, vergrößert und längs geschnitten,
- Fig. 31: ein Detail aus Fig. 30 in schematischer Unteransicht, entsprechend dem Pfeil Z,
- Fig. 32: den Gegenstand von Fig. 30 im Querschnitt,

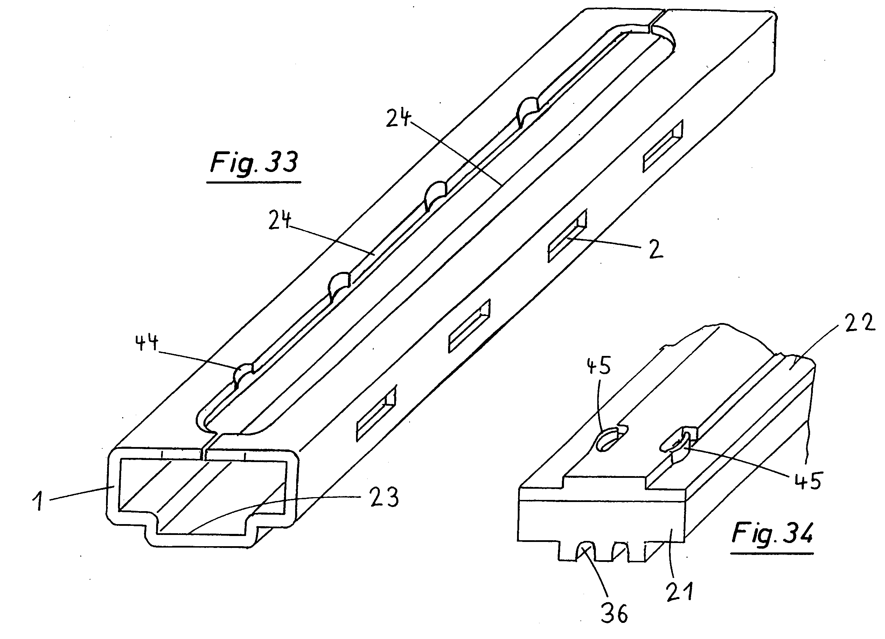

- Fig. 33: eine weitere Ausführungsform einer Führungsschiene in perspektivischer Ansicht und
- Fig. 34: ein zugehöriges Verstellteil (unvollständig), ebenfalls in perspektivischer Ansicht.

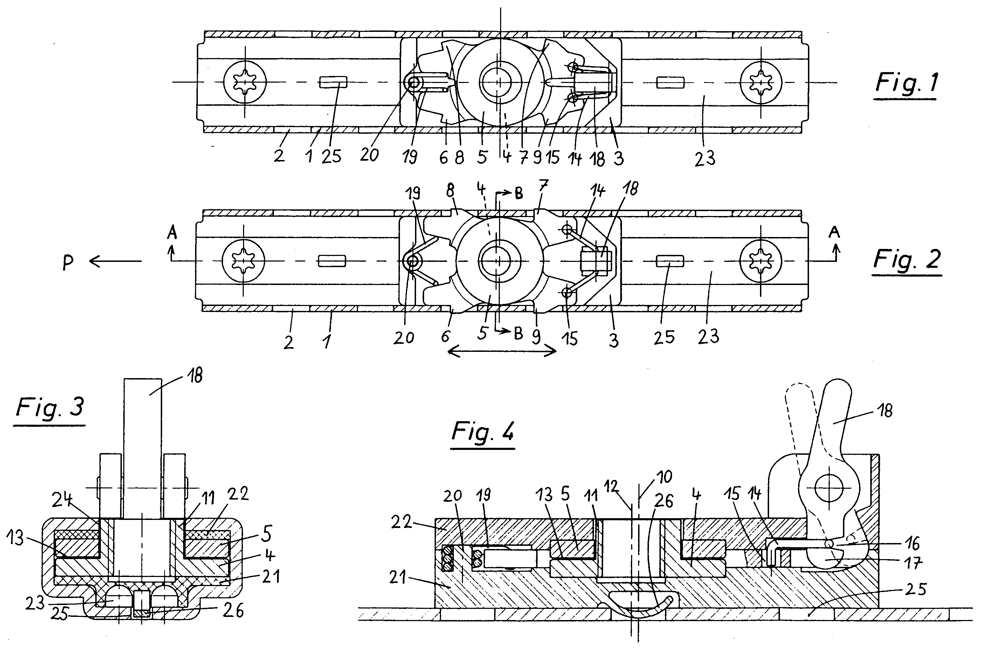

Ein erfindungsgemäßer Höhenversteller umfaßt nach den Fig. 1 und 2 im wesentlichen eine längliche Führungsschiene 1 mit seitlichen Rastöffnungen 2, in der ein Verstellteil 3 längsverschieblich gemäß Fig. 1 bzw. in einer bestimmten Rastposition gemäß Fig. 2 gehalten ist. Letztere wird mittels zweier flügelartiger Sperrorgane 4,5 gesichert, welche an ihren Enden Sperrklinken 6,7,8,9 aufweisen und damit in je eine Rastöffnung 2 der Führungsschiene 1 eingreifen. Die Sperrorgane 4,5 verlaufen in Bezug auf die mit einem Doppelpfeil versinnbildlichte Verschieberichtung des Verstellteils 3 schräg von einer Seite der Führungsschiene 1 zur anderen, wobei sie um eine gemeinsame Drehachse 10 gegeneinander drehbar sind und solchermaßen paarweise am bzw. im Verstellteil 3 gelagert sind. Die Sperrklinken 6,7 des Sperrorgans 4 greifen im gezeigten Ausführungsbeispiel nach Fig. 2 vorne rechts und hinten links an und die Sperrklinken 8,9 des Sperrorgans 5 vorne links und hinten rechts. In Bezug auf das einzelne Sperrorgan 4,5 sind die jeweiligen Sperrklinken 6,7 bzw. 8,9 also versetzt zueinander angeordnet und zu unterschiedlichen Seiten gerichtet. Dabei erfahren sie zur jeweils anderen Seite eine Ergänzung durch die Sperrklinken des zweiten Sperrorgans, so daß jeweils zwei Sperrklinken 6,8 bzw. 7,9 auf gleicher Höhe der Führungsschiene 1 in seitliche Rastöffnungen 2 mit gleicher Wirkrichtung - zur Aufnahme einer Zugkraft P - eingreifen.

Mit dem Verstellteil 3 ist ein hier nicht näher dargestellter Umlenkbeschlag verbindbar. Genauer gesagt, ist eine Verbindung direkt an den Sperrorganen 4,5 vorgesehen. Diese bestehen aus Metall, während das Verstellteil 3 aus Kunststoff gefertigt ist. Insbesondere weist das hintere (untere) Sperrorgan 4 nach den Fig. 3 und 4 einen Gewindedurchzug 11 auf, um den herum das vordere (obere) Sperrorgan 5 drehbar ist. Die insoweit bestehende Drehachse 10 ist hier jedoch nicht identisch mit der Gewindeachse 12, sondern verläuft dazu parallel versetzt. Zwischen den gegenseitigen Berührungsflächen der Sperrorgane 4,5 ist eine Kunststoffscheibe 13 angeordnet.

Die Rastposition nach Fig. 2 wird zunächst durch eine Formfeder, nämlich eine Schenkelfeder 14 gesichert. Diese ist zwischen die benachbarten Sperrklinken 7,9 eingesetzt und hat das Bestreben, beide Sperrklinken in gegenüberliegende Rastöffnungen 2 zu drücken. Mit ihren Enden ist die Schenkelfeder 14 in Bohrungen 15 im Bereich der Sperrklinken 7,9 eingehakt, während ihr mittlerer Bereich in einem Schlitz 16 am unteren Ende 17 eines Kipphebels 18 gehalten ist. Beim Betätigen des Kipphebels 18 wird die Schenkelfeder 14 zurückgezogen, wobei sich ihre Enden annähern und von der Stellung nach Fig. 2 in die Stellung nach Fig. 1 gelangen. Der Kipphebel 18 verläßt dabei die in Fig. 3 mit ausgezogenen Linien dargestellte Lage und erreicht schließlich die gestrichelt dargestellte Lage. Sämtliche Sperrklinken 6,7,8,9 befinden sich dann innerhalb der Führungsschiene 1 und außer Eingriff mit den Rastöffnungen 2.

Zwischen den Sperrklinken 6,8 ist eine weitere Feder wirksam, nämlich eine Schenkelfeder 19 mit mehreren Windungen, welche auf einen Zapfen 20 am Verstellteil 3 aufgesteckt und daran gesichert ist. Wie weiter ersichtlich, umschließt das Verstellteil 3 die Sperrorgane 4,5 mindestens teilweise, wobei es aus einem Unterteil 21 und einem Oberteil 22 besteht, welche miteinander verrastbar sind. Das Verstellteil 3 füllt die Führungsschiene 1 mit ihrem Kastenprofil, einschließlich einer etwa rechteckigen Vertiefung 23 am Boden vollständig aus. Vorne bilden im Abstand zueinander verlaufende Begrenzungsflanken 24 der Führungsschiene 1 einen Führungsschlitz, in den sich der Gewindedurchzug 11 erstreckt. Schließlich sind am Boden der Führungsschiene 1 noch weitere Ausnehmungen 25 vorgesehen, in die sich eine angespritzte elastische Lippe 26 an der Unterseite des Verstellteils 3 zur Erzielung einer Vorrastung eindrückt.

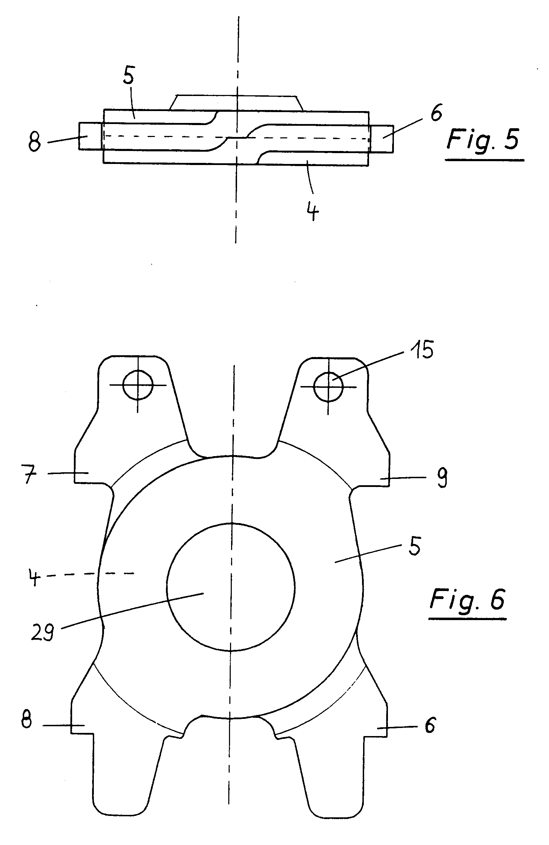

Nach den Fig. 5 und 6 weisen zwei zusammengehörige Sperrorgane 4,5 jeweils einen flachen mittleren Bereich in Scheibenform auf. Ihre Enden mit den Sperrklingen 6,7,8,9 sind dazu um ein Maß verkröpft, das der halben Materialstärke entspricht. Damit befinden sich die Sperrklinken 6,7 des Sperrorgans 4 in derselben Ebene, wie die Sperrklinken 8,9 des Sperrorgans 5.

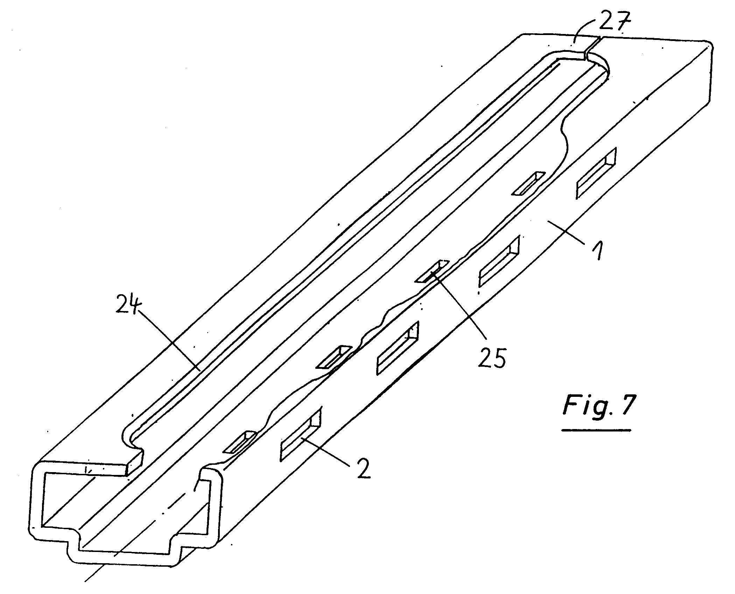

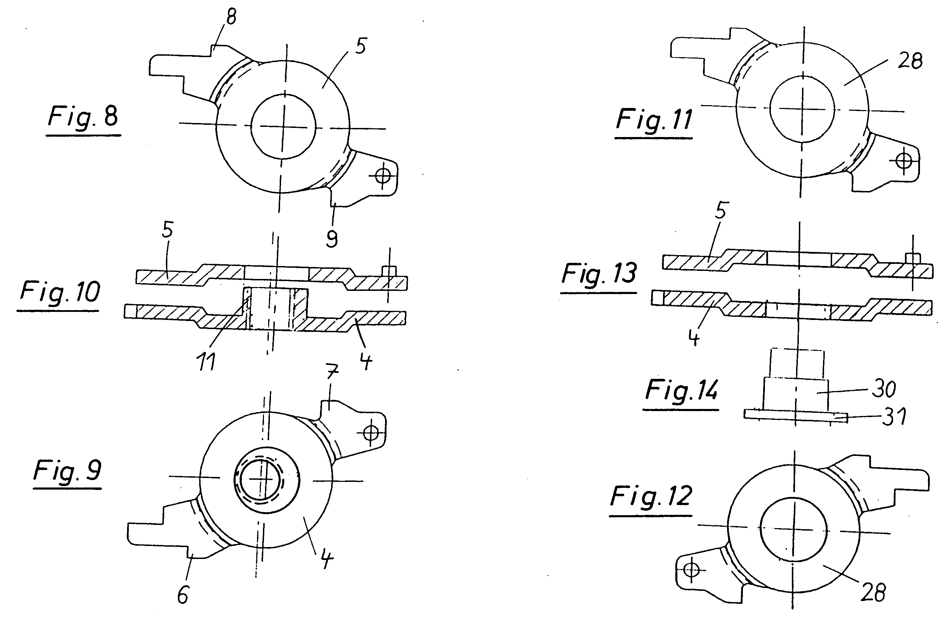

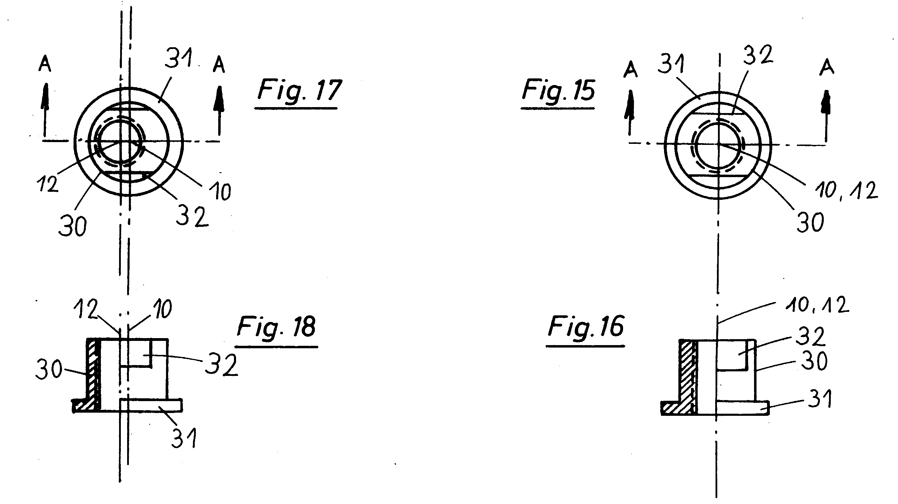

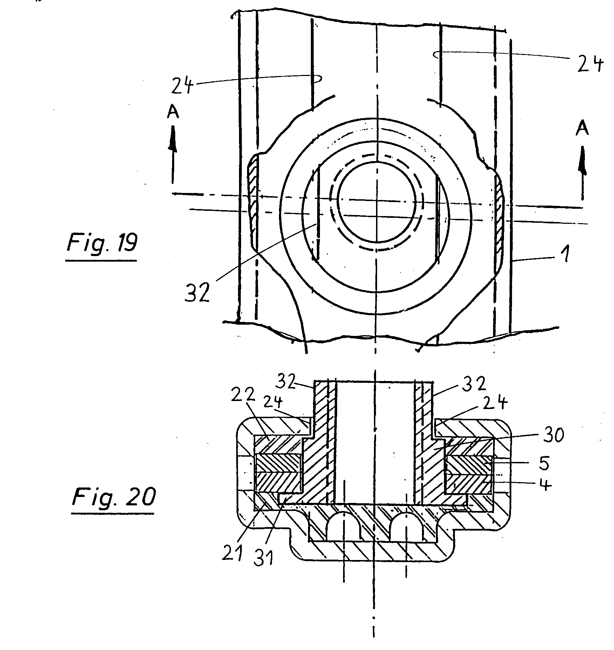

Wie Fig. 7 zu entnehmen ist, wird der Führungsschlitz nicht nur seitlich, sondern auch an Anfang und Ende der Führungsschiene 1 begrenzt. Dort bilden beigebogene Lappen 27 einen Anschlag für das Verstellteil 3, namentlich die Anschraubvorrichtung für den Umlenkbeschlag. Wie bereits erläutert und in den Fig. 8 bis 10 im einzelnen dargestellt, kann es sich bei den Sperrorganen um teilweise unterschiedlich gestaltete Elemente handeln. Sie können aber auch identisch ausgebildet sein, wie es die Fig. 11 bis 14 veranschaulichen. Dort weisen zwei Sperrorgane 28 von identischer Gestalt eine zentrale Aussparung 29 auf, in die ein loser Zentrierbolzen 30 mit einem Kragen 31 einsetzbar ist, wodurch sich wiederum ein gegeneinander drehbares Paar von Sperrorganen 4,5 ergibt. Nach den Fig. 15 und 16 kann ein Innengewinde vorgesehen werden, dessen Achse 12 mit der Drehachse 10 zusammenfällt, oder aber ein Gewinde mit einer versetzt zur Drehachse 10 verlaufenden Gewindeachse 12, wie es in den Fig. 17 und 18 dargestellt ist. In beiden Fällen sind seitliche Abflachungen 32 am Zentrierbolzen 30 vorgesehen, welche einen verdrehsicheren Halt in dem von den Begrenzungsflanken 24 gebildeten Führungsschlitz der Führungsschiene 1 erlauben. Dies veranschaulichen auch die Fig. 19 und 20.

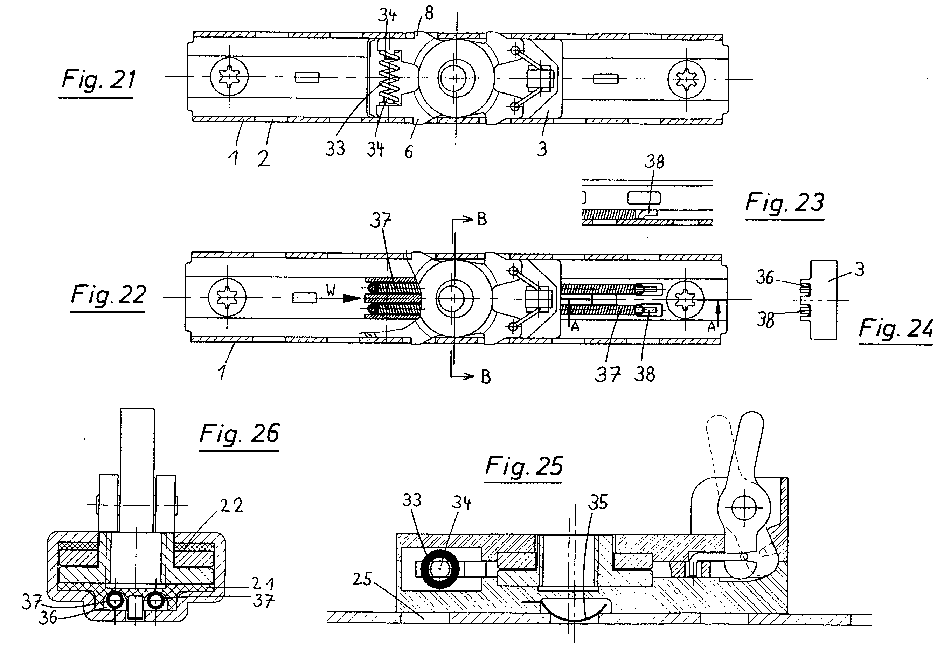

Die Fig. 21 bis 26 lassen zunächst einen ähnlichen Aufbau wie nach den Fig. 1 bis 4 erkennen. Im Unterschied dazu ist vorliegend jedoch eine Druckfeder 33 zwischen den Sperrklinken 6,8 vorgesehen. Gegeneinander gerichtete Sicherungsnasen 34 sorgen dabei für einen zuverlässigen Halt. Das Verstellteil 3 weist jetzt an seiner Unterseite ein Rastelement in Form einer eingesetzten Blattfeder 35 aus Metall auf. Ferner bestehen an der Unterseite des Verstellteils Aussparungen 36 für ein Rückholelement, nämlich hier zwei Zugfedern 37. Diese sind mit ihren Enden in (angespritzte) Anschlußnasen 38 des Verstellteils 3 sowie entsprechende (herausgestanzte) Einhänge- oder Anschlußnasen 38 der Führungsschiene 1 eingehängt.

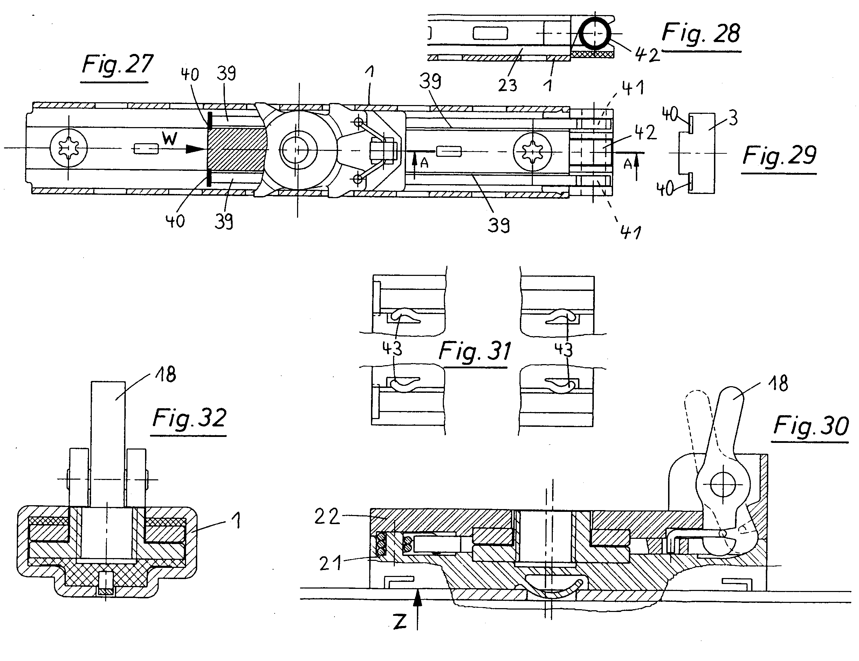

Aus den Fig. 27 bis 32 sind bei sonst ähnlichem Aufbau weitere Details im Zusammenhang mit einem anderen Rückholelement erkennbar. So sind danach zwei flache, parallel verlaufende Bänder 39 vorgesehen. Diese sind einerseits mittels Klemmen 40 an der Unterseite des Verstellteils 3 gesichert und andererseits auf den Enden einer Welle 41 auf- und abwickelbar, welche sich am oberen Ende der Führungsschiene 1 befindet und mittels einer Schloßfeder 42 gespannt ist. Als weitere Variante sind noch elastische Führungslippen 43 erkennbar, wie sie innerhalb der Vertiefung 23 der Führungsschiene 1 zur spielfreien seitlichen Führung wirksam sind.

Anstelle des Bodens der Führungsschiene 1 eignen sich auch die Begrenzungsflanken 24 zur Anbringung von speziellen Ausnehmungen 44 (ein- oder beidseitig) für eine Vorrastung. In dem Fall sollte das Verstellteil 3 am Oberteil 22 einen der Führungsnut angepaßten Führungssteg besitzen, aus dem seitlich elastische Rastelemente, wie Lippen 45 hervorspringen.

## Patentansprüche

1. Höhenversteller für Umlenkbeschläge von Sicherheitsgurten in Kraftfahrzeugen, bestehend aus einer Führungsschiene (1) mit einem darin längsverschieblichen Verstellteil (3), an dem der Umlenkbeschlag anbringbar ist, wobei die Führungsschiene (1) seitliche Rastöffnungen (2) besitzt und das Verstellteil (3) zwei drehbare Sperrorgane (4, 5) aus Metall aufweist, welche unter Einfluß einer Feder eine Verriegelung des Verstellteils (3) samt Umlenkbeschlag im Ruhezustand bewirkt und daraus mittels eines Hebels lösbar ist, wobei die beiden Sperrorgane (4, 5) mit jeweils zwei gleichwirkenden, jedoch zu unterschiedlichen Seiten gerichteten, versetzt zueinander angeordneten Sperrklinken (6, 7, 8, 9) versehen sind, welche der unmittelbaren Krafteinwirkung des Umlenkbeschlages unterliegen und derart um dieselbe Achse (10) gegeneinander verdrehbar sind, daß im Ruhezustand jeweils zwei Sperrklinken (6, 8; 7, 9) auf gleicher Höhe der Führungsschiene (1) in seitliche Rastöffnungen (2) eingreifen, **dadurch gekennzeichnet**, daß mindestens ein elastisches Rastelement (26, 35, 45) zur Erzielung einer Vorrastung, entsprechend den zwischen den Sperrklinken (6, 7, 8, 9) der Sperrorgane (4, 5) und den seitlichen Rastöffnungen (2) der Führungsschiene (1) möglichen Stellungen, vorgesehen ist.

2. Höhenversteller nach Anspruch 1, **dadurch gekennzeichnet**, daß das elastische Rastelement mindestens eine aus dem Material des Verstellteils (3) geformte Lippe, Feder (26, 45) o. dgl. ist.

3. Höhenversteller nach Anspruch 1, **dadurch gekennzeichnet**, daß das elastische Rastelement eine in das Verstellteil (3) eingelassene Blattfeder (35) aus Metall ist.

4. Höhenversteller nach einem der Ansprüche 1 bis 3, **dadurch gekennzeichnet**, daß für das elastische Rastelement oder die elastischen Rastelemente (26, 35, 45) eigene Ausnehmungen (25, 44) in der Führungsschiene (1) vorgesehen sind, insbesondere am Boden und/oder im Bereich von Begrenzungsflanken (24) der Führungsschiene (1).

5. Höhenversteller nach Anspruch 1, **dadurch gekennzeichnet**, daß eines der Sperrorgane (4) ein Gewinde zur Befestigung des Umlenkbeschlages aufweist.

6. Höhenversteller nach Anspruch 5, **dadurch gekennzeichnet**, daß es sich bei dem Gewinde um einen aus dem Material des Sperrorgans (4) geformten Gewindedurchzug (11) handelt.

7. Höhenversteller nach Anspruch 5, **dadurch gekennzeichnet**, daß das Gewinde in einem losen, mit einem Kragen (31) versehenen Zentrierbolzen (30) angeordnet ist, welcher in zentrale Aussparungen (29) der Sperrorgane (4, 5) einsetzbar ist.

8. Höhenversteller nach Anspruch 7, **dadurch gekennzeichnet**, daß der Zentrierbolzen (30) diametral gegenüberliegende seitliche Abflachungen (32) entsprechend dem Abstand paralleler Begrenzungsflanken (24) der Führungsschiene (1) aufweist.

9. Höhenversteller nach einem der Ansprüche 5 bis 8, **dadurch gekennzeichnet**, daß die Gewindeachse (12) für den Umlenkbeschlag parallel versetzt zur Drehachse (10) der Sperrorgane (4, 5) verläuft.

10. Höhenversteller nach einem der Ansprüche 1 bis 9, **dadurch gekennzeichnet**, daß die Sperrorgane (4, 5) zwischen ihren Sperrklinken (6, 7, 8, 9) einen flachen mittleren Bereich in Scheibenform aufweisen, wobei die Sperrklinken (6, 7, 8, 9) dazu um das Maß der halben Materialstärke verkröpft sind.

11. Höhenversteller nach Anspruch 10, **dadurch gekennzeichnet**, daß zwischen den gegenseitigen Berührungsflächen der Sperrorgane (4, 5) eine Kunststoffscheibe (13) angeordnet ist.

12. Höhenversteller nach einem der Ansprüche 1 bis 11, **dadurch gekennzeichnet**, daß die auf die Sperrklinke (6, 7) eines Sperrorgans (4) wirkende Feder sich gegen die benachbarte Sperrklinke (8, 9) des anderen Sperrorgans (5) abstützt und jenes gleichzeitig mit beaufschlagt.

13. Höhenversteller nach Anspruch 12, **dadurch gekennzeichnet**, daß als Feder eine als Formfeder ausgebildete Schenkelfeder (14) vorgesehen ist, deren Enden mit den Sperrklinken (7, 9) verbunden sind und an deren mittlerem Bereich der Hebel zum Lösen der Verriegelung angreift.

14. Höhenversteller nach den Ansprüchen 12 und 13, **dadurch gekennzeichnet**, daß für die übrigen Sperrklinken (6, 8) eine Druckfeder (33) vorgesehen ist, welche im Bereich der Sperrklinken (6, 8) an Sicherungsnasen (34) gehalten ist.

15. Höhenversteller nach den Ansprüchen 12 und 13, **dadurch gekennzeichnet**, daß für die übrigen Sperrklinken (6, 8) eine ggfs. mit mehreren Windungen ausgestattete Schenkelfeder (19) vorgesehen ist, welche auf einen Zapfen (20) am Verstellteil (3) aufgesteckt und daran gesichert ist.

16. Höhenversteller nach einem der Ansprüche 13 bis 15, **dadurch gekennzeichnet**, daß der Hebel zum Lösen der Verriegelung als Kipphebel (18) ausgebildet ist, welcher mit seinem unteren Ende (17) die Schenkelfeder (14) zurückzieht und dadurch die Sperrklinken (6, 7, 8, 9) aus den Rastöffnungen (2) zurücktreten läßt.

17. Höhenversteller nach Anspruch 16, **dadurch gekennzeichnet**, daß zur Mitnahme der Schenkelfeder (14) ein Schlitz (16) am unteren Ende (17) des Kipphebels (18) vorgesehen ist.

18. Höhenversteller nach einem der Ansprüche 1 bis 17, **dadurch gekennzeichnet**, daß die Sperrorgane (4, 5) mindestens teilweise von dem Verstellteil (3) umschlossen sind, wobei dieses als zweiteiliges Kunststoffgehäuse mit einem Unterteil (21) und einem damit verbindbaren, insbesondere aufklemmbaren, verrastbaren oder aufclipsbaren Oberteil (22) ausgebildet ist.

19. Höhenversteller nach Anspruch 18**, dadurch gekennzeichnet**, daß das Unterteil (21) des Verstellteils (3) ggfs. in eine etwa rechteckige Vertiefung (23) in der Führungsschiene (1) eingreift und mittels elastischer Führungslippen (43) o. dgl. spielfrei geführt ist.

20. Höhenversteller nach Anspruch 18 oder 19, **dadurch gekennzeichnet**, daß das Verstellteil (3) an seiner Unterseite Aussparungen (36) und/oder Anschlußmittel für die freien Enden von Rückholelementen aufweist.

21. Höhenversteller nach Anspruch 20, **dadurch gekennzeichnet**, daß als Rückholelement mindestens eine Zugfeder (37) und als Anschlußmittel Anschlußnasen (38) sowohl am Verstellteil (3) als auch an der Führungsschiene (1) vorgesehen sind.

22. Höhenversteller nach Anspruch 20, **dadurch gekennzeichnet**, daß als Rückholelement zwei parallele Bänder (39) und als Anschlußmittel zwei Klemmen (40) am Verstellteil (3) vorgesehen sind, wobei die Bänder (39) auf den Enden einer am oberen Ende der Führungsschiene (1) angebrachten und von einer Schloßfeder (42) gespannten Welle (41) auf- und abwickelbar sind.

## Claims

1. A vertical adjuster for deflection fittings of safety belts for motor vehicles, consisting of a guide rail (1) with an adjustment part longitudinally displaceable therein, on which the deflection fitting is able to be applied, wherein the guide rail (1) has lateral detent openings (2) and the adjustment part (3) has two rotatable locking members (4, 5) of metal which, under the influence of a spring, effects a locking of the adjustment part (3) together with the deflection fitting in the state of rest and is releasable therefrom by means of a lever, wherein the two locking members (4, 5) are provided with respectively two locking catches (6,7, 8, 9) acting in the same way but directed to different sides, arranged staggered with respect to each other, which are subject to the direct action of force of the deflection fitting and are rotatable with respect to each other about the same axis (10) such that in the state of rest respectively two locking catches (6,8;7,9) engage at the same height of the guide rail (1) into lateral detent openings (2), characterised in that at least one elastic detent element (26,35,45) is provided to achieve a pre-arresting, corresponding to the positions possible between the locking catches (6,7,8,9) of the locking members (4,5) and the lateral detent openings (2) of the guide rail (1).

2. A vertical adjuster according to Claim 1, characterised in that the elastic detent element is at least one lip, spring (26,45) or the like formed from the material of the adjustment part (3).

3. A vertical adjuster according to Claim 1, characterised in that the elastic detent element is a plate spring (35) let into the adjustment part (3).

4. A vertical adjuster according to one of Claims 1 to 3, characterised in that the elastic detent element or the elastic detent elements (26,35,45) have their own recesses (25,44) provided in the guide rail, in particular on the base and/or in the region of boundary flanks (24) of the guide rail (1).

5. A vertical adjuster according to Claim 1, characterised in that one of the locking members (4) has a thread for fastening the deflection fitting.

6. A vertical adjuster according to Claim 5, characterised in that the thread is a threaded passage (11) formed from the material of the locking member (4).

7. A vertical adjuster according to Claim 5, characterised in that the thread is arranged in a loose centering pin (30) provided with a collar (31) which pin (30) is able to be inserted into central recesses (29) of the locking members (4,5).

8. A vertical adjuster according to Claim 7, characterised in that the centering pin (30) has lateral flattened areas (32), lying diametrically opposed, corresponding to the spacing of parallel boundary flanks (24) of the guide rail (1).

9. A vertical adjuster according to one of Claims 5 to 8, characterised in that the threaded axis (12) for the deflection fitting runs staggered in a parallel manner to the rotation axis (10) of the locking members (4,5).

10. A vertical adjuster according to one of Claims 1 to 9, characterised in that the locking members (4,5) have a flat central region in a disc shape between their locking catches (6,7,8,9), wherein the locking catches (6,7,8,9) are bent for this by the extent of half the material thickness.

11. A vertical adjuster according to Claim 10, characterised in that a plastic disc (13) is arranged between the reciprocal contact faces of the locking members (4,5).

12. A vertical adjuster according to one of Claims 1 to 11, characterised in that the spring acting on the locking catch (6,7) of a locking member (4) rests against the adjacent locking catch (8,9) of the other locking member (5) and simultaneously also acts on the former.

13. A vertical adjuster according to Claim 12, characterised in that as a spring, a shank spring (14) is provided which is constructed as a form spring, the ends of which are connected with the locking catches (7,9) and on the central region of which the lever engages for releasing the locking arrangement.

14. A vertical adjuster according to Claims 12 and 13, characterised in that for the remaining locking catches (6,8) a compression spring (33) is provided, which is held in the region of the locking catches (6,8) on security noses (34).

15. A vertical adjuster according to Claims 12 and 13, characterised in that for the remaining locking catches (6,8) a shank spring (19) is provided, equipped with several windings if necessary, which spring (19) is placed onto a pin (20) on the adjustment part (3) and secured thereon.

16. A vertical adjuster according to one of Claims 13 to 15, characterised in that the lever for releasing the locking arrangement is constructed as a rocker arm (18) which by its lower end (17) draws back the shank spring (14) and thereby allows the locking catches (6,7,8,9) to withdraw from the detent openings (2).

17. A vertical adjuster according to Claim 16, characterised in that to entrain the shank spring (14) a slit (16) is provided at the lower end (17) of the rocker arm (18).

18. A vertical adjuster according to one of Claims 1 to 17, characterised in that the locking members (4,5) are surrounded at least partially by the adjustment part (3), wherein this is constructed as a two-part plastic housing with a lower part (21) and an upper part (22) connectable therewith, in particular able to be clamped on, arrested or clipped on.

19. A vertical adjuster according to Claim 18, characterised in that the lower part (21) of the adjustment part (3) engages if necessary into an approximately rectangular depression (23) in the guide rail (1) and is guided free of play by means of elastic guide lips (43) or the like.

20. A vertical adjuster according to Claim 18 or 19, characterised in that the adjustment part (3) has on its lower face recesses (36) and/or connecting means for the free ends of return members.

21. A vertical adjuster according to Claim 20, characterised in that as return member at least one tension spring (37) is provided and as connecting means connecting noses (38) are provided both on the adjustment part (3) and also on the guide rail (1).

22. A vertical adjuster according to Claim 20, characterised in that as return member two parallel bands (39) are provided and as connecting means two clamps (40) are provided on the adjustment part (3), wherein the bands (39) are able to be wound and unwound on the ends of a shaft (41) arranged at the upper end of the guide rail (1) and tensioned by a lock spring (42).

## Revendications

1. Dispositif de réglage en hauteur de ferrures de renvoi destinées à des ceintures de sécurité montées dans des véhicules automobiles, constitué d'un rail de guidage (1) comportant une partie de réglage (3) y étant déplaçable longitudinalement, sur laquelle la ferrure de renvoi peut être montée, le rail de guidage (1) comportant des ouvertures d'encliquetage latérales (2) et la partie de réglage (3) présentant deux organes de blocage (4, 5) pouvant tourner, réalisés en métal, qui, sous l'influence d'un ressort, provoquent un verrouillage de la partie de réglage (3) avec la ferrure de renvoi, à l'état de repos, et le verrouillage pouvant être désolidarisé au moyen d'un levier, les deux organes de blocage (4, 5) étant pourvus chacun de deux cliquets de blocage (6, 7, 8, 9) agissant de la même façon, cependant dirigés sur des côtés différents, décalés les uns par rapport aux autres, cliquets soumis à l'effet direct de la force de la ferrure de renvoi et pouvant tourner l'un par rapport à l'autre autour du même axe (10), de manière que, à l'état de repos, chaque fois deux cliquets de blocage (6, 8; 7, 9) s'engagent, à une hauteur différente du rail de guidage (1), dans des ouvertures d'encliquetage (2) latérales, caractérisé par le fait qu'au moins un élément d'encliquetage (26, 35, 45) élastique est prévu pour obtenir un pré-encliquetage, de manière correspondante aux positions possibles entre les cliquets de blocage (6, 7, 8) des organes de blocage (4, 5) et les ouvertures d'encliquetage latérales (2) du rail de guidage (1).

2. Dispositif de réglage en hauteur selon la revendication 1, caractérisé par le fait que l'élément d'encliquetage élastique est au moins une lèvre, un ressort (26, 45) ou analogue, formé à partir du matériau de la partie de réglage (3).

3. Dispositif de réglage en hauteur selon la revendication 1, caractérisé par le fait que l'élément d'encliquetage élastique est un ressort à lame (35) en métal, inséré dans la partie de réglage (3).

4. Dispositif de réglage en hauteur selon l'une des revendications 1 à 3, caractérisé par le fait que, pour l'élément d'encliquetage élastique ou bien pour les éléments d'encliquetage élastique (26, 35, 45), sont prévus des évidements (25, 44) propres dans le rail de guidage (1), en particulier sur le fond et/ou dans la zone des flancs de limitation (24) du rail de guidage (1).

5. Dispositif de réglage en hauteur selon la revendication 1, caractérisé par le fait que l'un des organes de blocage (4) présente un filetage pour assurer la fixation de la ferrure de renvoi.

6. Dispositif de réglage en hauteur selon la revendication 5, caractérisé par le fait que, concernant le filetage, il s'agit d'un soyage à filetage (11), formé à partir du matériau de l'organe de blocage (4).

7. Dispositif de réglage en hauteur selon la revendication 5, caractérisé par le fait que le filetage est réalisé dans un boulon de centrage (30) lâche, pourvu d'une collerette (31), pouvant être insérée dans des évidements centraux (29) des organes de blocage (4, 5).

8. Dispositif de réglage en hauteur selon la revendication 7, caractérisé par le fait que le boulon de centrage (30) présente des aplatissements (32) latéraux diamétralement opposés, correspondant à l'espace entre les flancs de limitation (24) parallèles du rail de guidage (1).

9. Dispositif de réglage en hauteur selon l'une des revendications 5 à 8, caractérisé par le fait que l'axe de filetage (12) destiné à la ferrure de renvoi s'étend parallèlement et de façon décalée par rapport à l'axe de rotation (10) des organes de blocage (4, 5).

10. Dispositif de réglage en hauteur selon l'une des revendications 1 à 9, caractérisé par le fait que les organes de blocage (4, 5) présentent entre leurs cliquets de blocage (6, 7, 8, 9) une zone médiane plate à forme discoïde, les cliquets de blocage (6, 7, 8, 9) étant pour cela coudés, de la valeur de la moitié de l'épaisseur du matériau.

11. Dispositif de réglage en hauteur selon la revendication 10, caractérisé par le fait qu'entre les surfaces de contact mutuelles des organes de blocage (4, 5) est disposé un disque (13) en matière plastique.

12. Dispositif de réglage en hauteur selon l'une des revendications 1 à 11, caractérisé par le fait que le ressort agissant sur le cliquet de blocage (6, 7) d'un organe de blocage (4) prend appui contre le cliquet de blocage (8, 9) voisin de l'autre organe de blocage (5) et sollicite celui-ci conjointement.

13. Dispositif de réglage en hauteur selon la revendication 12, caractérisé par le fait qu'est prévu comme ressort un ressort à branches (14) réalisé sous la forme d'un ressort profilé, dont les extrémités sont reliées au cliquet de blocage (7, 9) et sur la zone médiane duquel agit le levier de désolidarisation du verrouillage.

14. Dispositif de réglage en hauteur selon les revendications 12 et 13, caractérisé par le fait que pour les autres cliquets de blocage (6, 8), est prévu un ressort de compression (33) qui est maintenu dans la zone des cliquets de blocage (6, 8) sur des ergots de sécurité (34).

15. Dispositif de réglage en hauteur selon les revendications 12 et 13, caractérisé par le fait que pour les autres cliquets de blocage (6, 8), est prévu un ressort à branches (19), doté le cas échéant de plusieurs spires, qui est enfilé sur un tenon (20) se trouvant sur la partie de réglage (3) et est fixé sur celui-ci.

16. Dispositif de réglage en hauteur selon l'une des revendications 13 à 15, caractérisé par le fait que le levier de désolidarisation du verrouillage est réalisé sous la forme de levier basculant (18), qui rétracte, par son extrémité inférieure (17), le ressort à branches (14) et fait de ce fait revenir les cliquets de blocage (6, 7, 8, 9) hors des ouvertures d'encliquetage (2).

17. Dispositif de réglage en hauteur selon la revendication 16, caractérisé par le fait que, pour assurer l'entraînement du ressort à branches (14), est prévue une fente (16) ménagée à l'extrémité inférieure (17) du levier basculant (18).

18. Dispositif de réglage en hauteur selon l'une des revendications 1 à 17, caractérisé par le fait que les organes de blocage (4, 5) sont au moins partiellement entourés par la partie de réglage (3), celle-ci étant réalisée sous la forme d'un boîtier en matière plastique en deux parties avec une partie inférieure (21) et une partie supérieure (22) susceptible de lui être reliée, en particulier susceptible d'être montée sur elle par serrage, d'être encliquetée ou d'être enclipsée.

19. Dispositif de réglage en hauteur selon la revendication 18, caractérisé par le fait que la partie inférieure (21) de la partie de réglage (3) s'engage, le cas échéant, dans un creusement (23) rectangulaire ménagé dans le rail de guidage (1) et est guidé, sans jeu, au moyen de lèvres de guidage (43) élastiques ou analogues.

20. Dispositif de réglage en hauteur selon la revendication 18 ou 19, caractérisé par le fait que la partie de réglage (3) présente sur sa face inférieure des évidements (36) et/ou des moyens de raccordement destinés aux extrémités libres des éléments de rappel.

21. Dispositif de réglage en hauteur selon la revendication 20, caractérisé par le fait que sont prévus comme élément de rappel au moins un ressort de traction (37) et comme moyens de raccordement des ergots de raccordement (38), tant sur la partie de réglage (3) qu'également sur le rail de guidage (1).

22. Dispositif de réglage en hauteur selon la revendication 20, caractérisé par le fait que sont prévus comme éléments de rappel deux bandes (39) parallèles et comme moyens de raccordement deux bornes (40) sur la partie de réglage (3), les bornes (39) étant susceptibles d'être enroulées et déroulées sur les extrémités d'un arbre (41) monté à l'extrémité supérieure du rail de guidage (1) et soumis à la tension d'un ressort spiral (42).
